# EUROPÄISCHE PATENTSCHRIFT

(11) **EP 1 982 405 B1**
(45) Veröffentlichungstag und Bekanntmachung des Hinweises auf die Patenterteilung: **08.07.2009**
(21) Anmeldenummer: 07703849.5
(22) Anmeldetag: 15.01.2007
(51) Int. Cl.: H02K 11/00

(54) **MOTOREINHEIT**
MOTOR UNIT
UNITÉ MOTEUR

(30) Priorität: 01.02.2006 DE 102006004606
(43) Veröffentlichungstag der Anmeldung: 22.10.2008
(73) Patentinhaber: Brose Fahrzeugteile GmbH & Co. KG, 97076 Würzburg (DE)
(72) Erfinder: BUBAN, Tobias, 97218 Gerbrunn (DE); DABOVAL, Nicolas, 93260 Les Lilas (FR); DUTOYA, Roland, F-31100 Toulouse (FR)
(74) Vertreter: Reinhard - Skuhra - Weise & Partner GbR
(86) Internationale Anmeldenummer: PCT/EP2007/050333
(87) Internationale Veröffentlichungsnummer: WO 2007/088097

(56) Entgegenhaltungen:
- EP-A- 1 560 314
- DE-A1- 10 236 700
- US-A- 5 959 384

## Beschreibung

Die Erfindung betrifft eine Motoreinheit, die einen Stator, einen Rotor mit einer Rotorwelle, Mittel zur elektrischen Kontaktierung des Stators, einen mit einem Rotorsignalgeber der Rotorwelle zusammenwirkenden Rotorsignalempfänger und eine Motorsteuereinheit aufweist.

Eine solche Motoreinheit ist aus US-A-5.959.384 bekannt.

Bei einer derartigen Motoreinheit handelt es sich beispielsweise um eine in einem Kraftfahrzeug verwendete Motoreinheit, die als Lenkungsmotor, Fensterhebermotor, als Motor für das Schiebe-Hebedach des Kraftfahrzeugs oder als Antriebsmotor für eine Pumpeneinheit verwendet werden kann.

Bei einer derartigen bekannten Motoreinheit sind der Stator und der Rotor über eine gesonderte Kontakteinheit mit der Motorsteuereinheit verbunden. Dabei werden zwischen dem Stator und der Kontakteinheit Sternpunktverbindungen und Phasenverbindungen benötigt. Weiterhin sind zwischen der Kontakteinheit und der Motorsteuereinheit weitere Phasenverbindungen sowie Signalleitungen vorgesehen. Der Zusammenbau einer derartigen Motoreinheit ist aufwändig, da zur Verbindung des Stators mit der Kontakteinheit und zur Verbindung der Kontakteinheit mit der Motorsteuereinheit jeweils eine Vielzahl von Verbindungsschritten notwendig ist.

Die Aufgabe der Erfindung besteht darin, eine Motoreinheit anzugeben, deren Zusammenbau vereinfacht ist.

Diese Aufgabe wird durch eine Motoreinheit mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass die Anzahl der Bauteile der Motoreinheit und auch die Anzahl der beim Zusammenbau der Motoreinheit durchzuführenden Verbindungsschritte reduziert ist.

Diese Vorteile sind insbesondere darauf zurückzuführen, dass die bei bekannten Motoreinheiten vorgesehene gesonderte Kontakteinrichtung nicht mehr notwendig ist, da die Funktionen der Kontaktierung des Stators mit der Motorsteuereinheit und der Kontaktierung des Rotors mit der Motorsteuereinheit von der Motorsteuereinheit selbst übernommen werden. Die komplette Phasen- und Signalgeberverschaltung des Motors erfolgt innerhalb der Motorsteuereinheit.

Diese weist gemäß einer bevorzugten Ausführungsform Stanzgitter auf, unter deren Verwendung die notwendigen Verschaltungen des Motors erfolgen. Dazu gehören die notwendigen Verbindungen und Verschaltungen der Statorwicklung sowie die notwendigen Verbindungen und Verschaltungen der vom Rotorsignalgeber abgeleiteten Signale.

Die Stanzgitter der Motorsteuereinheit sind in vorteilhafter Weise auf einer aus Kunststoff bestehenden Grundplatte der Motorsteuereinheit befestigt. Dadurch ist ein sicherer Halt und die notwendige gegenseitige elektrische Isolierung der Stanzgitter gewährleistet.

Die in der Motorsteuereinheit zur elektrischen Signalverarbeitung benötigten Bauteile, zu denen ein Prozessor, Drosseln, Leistungsteile, Ohmsche Widerstände, Potentiometer, Sternpunktrelais, Phasenrelais, usw., gehören, sind ebenfalls mit dem Stanzgitter bzw. den Stanzgittern elektrisch verbunden.

Werden - wie es im Anspruch 6 angegeben ist - zur Kontaktierung zusätzlich Kontaktplatten verwendet, dann ist die Herstellung des jeweiligen Kontaktes vereinfacht.

Da auch der Rotorsignalempfänger mit der Grundplatte der Motorsteuereinheit fest verbunden und mit einem zugehörigen Stanzgitter der Motorsteuereinheit elektrisch kontaktiert ist, bedarf es auch keiner zusätzlichen Signalverbindungen zwischen einer gesonderten Kontakteinheit und der Motorsteuereinheit.

Die benötigte Abdichtung der Motoreinheit, der die Motorsteuereinheit und der Motor selbst angehören, wird vorzugsweise durch einen Abschlussdeckel der Motorsteuereinheit sichergestellt, welcher mit einem den Motor umschließenden Stahlgehäuse fest verbunden ist, beispielsweise unter Verwendung von Schrauben. Der Abschlussdeckel selbst besteht vorzugsweise aus Kunststoff.

Sind die Motorsteuereinheit und deren Stanzgitter in Axialrichtung des Motors neben den Elementen des Motors angeordnet, dann sind die notwendigen Kontaktierungen in besonders einfacher Weise realisierbar.

Weitere vorteilhafte Eigenschaften der Erfindung ergeben sich aus deren beispielhafter Erläuterung anhand der Figuren. Es zeigt:
- FIG 1: eine Skizze zur Veranschaulichung einer Motoreinheit gemäß der Erfindung und
- FIG 2: eine detailliertere Darstellung eines Teils einer Motoreinheit gemäß der Erfindung.

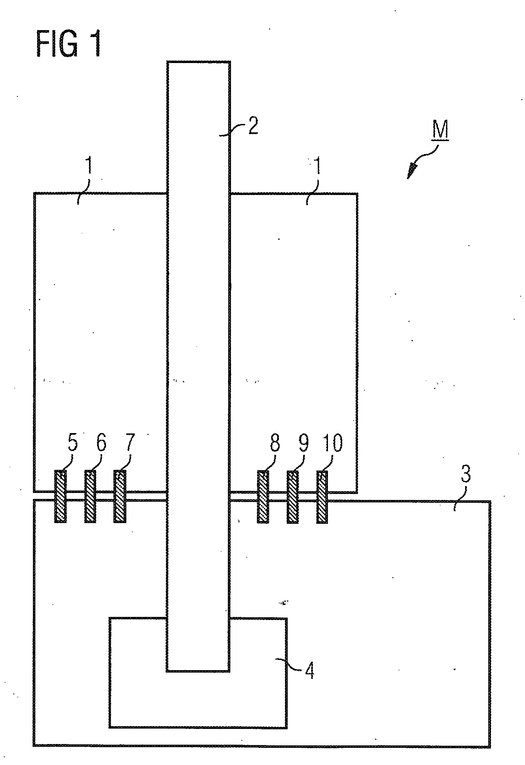

Die FIG 1 zeigt eine Skizze zur Veranschaulichung einer Motoreinheit gemäß der Erfindung. Die dargestellte Motoreinheit weist einen eine Statorwicklung aufweisenden Stator 1, einen Rotor mit einer Rotorwelle 2, einen mit der Rotorwelle verbundenen Rotorkern mit Permanentmagneten sowie eine Motorsteuereinheit 3 auf. Der Stator 1 ist mit der Motorsteuereinheit 3 über Sternpunktverbindungen 5, 6, 7 und Phasenverbindungen 8, 9, 10 ohne Zwischenschaltung einer gesonderten, zusätzlichen Kontakteinheit direkt verbunden. Weiterhin reicht ein Ende der Rotorwelle 2 bis in die Motorsteuereinheit 3 hinein. An diesem Ende der Rotorwelle ist eine Signalgebereinheit 4 vorgesehen, die einen mit der Rotorwelle fest verbundenen und sich mit dieser drehenden Rotorsignalgeber sowie einen Rotorsignalempfänger aufweist. Letzterer ist fest an der Motorsteuereinheit angebracht und des Weiteren mit den elektronischen Bauteilen der Motorsteuereinheit elektrisch kontaktiert. Da alle vorgenannten Bauteile Bestandteile der Motorsteuereinheit 3 sind, bedarf es keinerlei Verbindungen zwischen einer zusätzlichen Kontaktiereinheit und der Motorsteuereinheit. Insbesondere werden dabei wegen des Wegfalls der Notwendigkeit einer zusätzlichen Kontakteinheit drei Phasenverbindungen zwischen der Kontakteinheit und der Motorsteuereinheit sowie mehrere Signalverbindungen zwischen der Kontakteinheit und der Motorsteuereinheit, wie sie bei bekannten Motoreinheiten vorgesehen sind, nicht mehr benötigt.

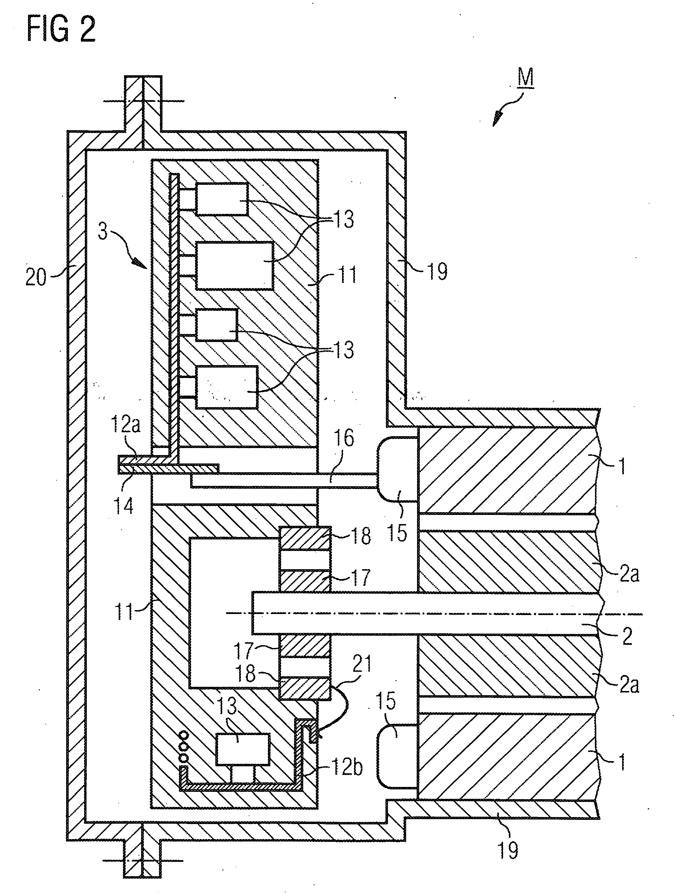

Die FIG 2 zeigt eine detailliertere Darstellung eines Teils einer Motoreinheit gemäß der Erfindung. Insbesondere geht aus der FIG 2 hervor, dass die Motoreinheit einen Elektromotor aufweist, von welchem in der Figur der eine Statorwicklung 15 aufweisende Stator 1 sowie die Rotorwelle 2 mit daran befestigtem Rotorkern 2a gezeigt ist. Weiterhin ist in einem Endbereich der Rotorwelle 2 ein Rotorsignalgeber 17 vorgesehen, der sich zusammen mit der Rotorwelle dreht. Der Stator 1 des Motors ist an einem Motorlagerschild oder an einem Motorgehäuse 19 befestigt.

Weiterhin ist aus der FIG 2 ersichtlich, dass die Motoreinheit eine Motorsteuereinheit 3 aufweist. Diese umfasst eine aus Kunststoff bestehende Grundplatte 11, die als Träger für Stanzgitter 12a und 12b dient. Die Stanzgitter wiederum sind mit elektronischen Bauelementen 13 der Motorsteuereinheit 3 elektrisch verbunden, wobei diese elektronischen Bauelemente ebenfalls auf der Grundplatte 11 befestigt sind. Zu diesen elektronischen Bauelementen gehören Drosseln, Leistungsteile, Ohmsche Widerstände, Potentiometer, Sternpunkt-Relais, Phasenrelais sowie ein Prozessor. Ferner werden die genannten Stanzgitter zur Kontaktierung des Motors mit den elektronischen Bauelementen der Motorsteuereinheit verwendet.

Beispielsweise ist ein Wicklungsdraht der Statorwicklung 15 über eine Kontaktplatte 14 mit dem Stanzgitter 12a verbunden.

Ferner ist an der Grundplatte 11 der Motorsteuereinheit 3 ein Rotorsignalempfänger 18 befestigt, beispielsweise angeklebt. Bei diesem Rotorsignalempfänger, der mit dem an der Rotorwelle 2 befestigten Rotorsignalgeber 17 zusammenwirkt, kann es sich um einen Resolver oder einen anisotopischen magnetoresitiven Sensor (AMR-Sensor) handeln. Auch dieser Rotorsignalempfänger 18 ist mit einem auf der Grundplatte 11 befestigten Stanzgitter 12b über eine elektrische Verbindung 21 elektrisch kontaktiert.

Durch diese direkte Verbindung des Stators und die unmittelbare Kopplung des Rotors des Elektromotors an die Motorsteuereinheit bedarf es keiner gesonderten, zwischen dem Elektromotor und der Motorsteuereinheit vorgesehenen Kontakteinheit. Folglich ist die Anzahl der Bauteile, die eine Motoreinheit gemäß der Erfindung aufweist, reduziert. Weiterhin ist auch die Anzahl der Verbindungsvorgänge, die zum Zusammenbau der Motoreinheit notwendig sind, reduziert.

Die in der FIG 2 gezeigte Motorsteuereinheit 3 ist von einem Abschlussdeckel 20 umgeben, der vorzugsweise aus einem Kunststoffmaterial besteht. Dieser Abschlussdeckel 20 dient in Verbindung mit dem Motorgehäuse 19 zur Herstellung der notwendigen Dichtheit der Motoreinheit. Dabei ist der Abschlussdeckel 20 mit dem Motorgehäuse 19 verschraubt.

Die Vorteile der vorstehend beschriebenen Erfindung bestehen nach alledem im Wesentlichen im Wegfall der bei bekannten Motoreinheiten benötigten gesonderten Motorkontakteinheit. Gemäß der vorliegenden Erfindung werden die erforderlichen Kontaktierungen des Motors von der Motorsteuereinheit selbst wahrgenommen. Zu diesem Zweck ist die Motorsteuereinheit mit Mitteln zur elektrischen Kontaktierung des Stators und des mit dem Rotorsignalgeber der Rotorwelle zusammenwirkenden Rotorsignalempfängers ausgestattet. Insbesondere erfolgt diese elektrische Kontaktierung, d. h. die komplette Phasen- und Signalgeberverschaltung des Motors, unter Verwendung von Stanzgittern, die direkt oder über Kontaktplatten mit Drähten des Stators bzw. mit dem Rotorsignalempfänger elektrisch kontaktiert sind. Die Stanzgitter, die ihrerseits mit den elektronischen Bauteilen der Motorsteuereinheit elektrisch verbunden sind und auch über diese Bauteile miteinander in Verbindung stehen, sind auf einer aus Kunststoff bestehenden Grundplatte der Motorsteuereinheit befestigt. Diese Grundplatte dient auch als Träger für die genannten elektronischen Bauteile der Motorsteuereinheit. Die Grundplatte mit den darauf befestigten Stanzgittern ist vorzugsweise in Axialrichtung gesehen neben den Elementen des Motors positioniert. Dies erleichtert die notwendige elektrische Kontaktierung des Stators und des Rotors mit der Motorsteuereinheit.

Auf Grund der insgesamt erreichten Kompaktheit der Motoreinheit, die auf den hohen Integrationsgrad der verwendeten Bauteile zurückzuführen ist, sind auch die Robustheit und die Qualität der Motoreinheit verbessert. Dies begünstigt eine Massenproduktion von Motoreinheiten gemäß der Erfindung.

## Patentansprüche

1. Motoreinheit, aufweisend:
- einen Stator (1),
- einen Rotor mit einer Rotorwelle (2),
- Mittel (12a, 14) zur elektrischen Kontaktierung des Stators,
- einen mit einem Rotorsignalgeber (17) der Rotorwelle (2) zusammenwirkenden Rotorsignalempfänger (18),
- Mittel (12b, 21) zur elektrischen Kontaktierung des Rotorsignalempfängers und
- eine Motorsteuereinheit (3),
**dadurch gekennzeichnet,**
**dass** die Mittel (12a, 14) zur elektrischen Kontaktierung des Stators (1) und die Mittel (12b, 21) zur elektrischen Kontaktierung des mit dem Rotorsignalgeber (17) der Rotorwelle (2) zusammenwirkenden Rotorsignalempfängers (18) jeweils Bestandteil der Motorsteuereinheit (3) sind.

2. Motoreinheit nach Anspruch 1,
**dadurch gekennzeichnet,**
**dass** die Mittel zur elektrischen Kontaktierung Stanzgitter (12a, 12b) umfassen.

3. Motoreinheit nach Anspruch 2,
**dadurch gekennzeichnet,**
**dass** die Stanzgitter auf einer Grundplatte (11) der Motorsteuereinheit (3) befestigt sind.

4. Motoreinheit nach Anspruch 3,
**dadurch gekennzeichnet,**
**dass** die Grundplatte (11) aus Kunststoff besteht.

5. Motoreinheit nach einem der Ansprüche 2 bis 4,
**dadurch gekennzeichnet,**
**dass** die Mittel zur elektrischen Kontaktierung mindestens eine Kontaktplatte (14) umfassen.

6. Motoreinheit nach Anspruch 5,
**dadurch gekennzeichnet,**
**dass** die Kontaktplatte (14) zur Kontaktierung eines Wicklungsdrahtes (16) der Statorwicklung (15) mit einem Stanzgitter (12a) dient.

7. Motoreinheit nach einem der vorhergehenden Ansprüche,
**dadurch gekennzeichnet,**
**dass** der Rotorsignalempfänger (18) ein Resolver oder ein anisotopischer magnetoresistiver Sensor ist.

8. Motoreinheit nach einem der vorhergehenden Ansprüche,
**dadurch gekennzeichnet,**
**dass** der Rotorsignalempfänger (18) mit einem auf der Grundplatte (11) der Motorsteuereinheit (3) befestigten Stanzgitter (12b) elektrisch verbunden ist.

9. Motoreinheit nach einem der vorhergehenden Ansprüche,
**dadurch gekennzeichnet,**
**dass** der Rotorsignalempfänger (18) an der Grundplatte (11) der Motorsteuereinheit (3) befestigt ist.

10. Motoreinheit nach einem der vorhergehenden Ansprüche,
**dadurch gekennzeichnet,**
**dass** die Motorsteuereinheit (3) einen Abschlussdeckel (20) aufweist, welcher zur Abdichtung der Motoreinheit mit einem den Motor umgebenden Gehäuse (19) verbunden ist.

11. Motoreinheit nach einem der vorhergehenden Ansprüche,
**dadurch gekennzeichnet,**
**dass** die Grundplatte (11) der Motorsteuereinheit (3) in Axialrichtung des Motors neben den Elementen des Motors angeordnet ist.

## Claims

1. Motor unit, comprising:
- a stator (1),
- a rotor having a rotor shaft (2),
- means (12a, 14) for electrically contracting the stator,
- a rotor signal receiver (18) which interacts with a rotor signal transmitter (17) of the rotor shaft (2),
- means (12b, 21) for electrically contracting the rotor signal receiver, and
- a motor control unit (3),
**characterized**
**in that** the means (12a, 14) for electrically contracting the stator (1) and the means (12b, 21) for electrically contracting the rotor signal receiver (18) which interacts with the rotor signal transmitter (17) of the rotor shaft (2) are each a constituent part of the motor control unit (3).

2. Motor unit according to claim 1,
**characterized**
**in that** the means for making electrical contact comprises stamped grids (12a, 12b).

3. Motor unit according to claim 2,
**characterized**
**in that** the stamped grids are mounted on a base plate (11) of the motor control unit (3).

4. Motor unit according to Claim 3,
**characterized**
**in that** the base plate (11) is composed of plastic.

5. Motor unit according to one of Claims 2 to 4,
**characterized**
**in that** the means for making electrical contact comprise at least one contact plate (14).

6. Motor unit according to Claim 5,
**characterized**
**in that** the contact plate (14) serves to contact a winding wire (16) of the stator winding (15) to a stamped grid (12a).

7. Motor unit according to one of the preceding claims,
**characterized**
**in that** the rotor signal receiver (18) is a resolver or an anisotropic magnetoresistive sensor.

8. Motor unit according to one of the preceding claims,
**characterized**
**in that** the rotor signal receiver (18) is electrically connected to a stamped grid (12b) which is mounted on the base plate (11) of the motor control unit (3).

9. Motor unit according to one of the preceding claims,
**characterized**
**in that** the rotor signal receiver (18) is mounted on the base plate (11) of the motor control unit (3).

10. Motor unit according to one of the preceding claims,
**characterized**
**in that** the motor control unit (3) comprises a closure cover (20) which is connected to a housing (19), which surrounds the motor, in order to seal off the motor unit.

11. Motor unit according to one of the preceding claims,
**characterized**
**in that** the base plate (11) of the motor control unit (3) is arranged next to the elements of the motor in the axial direction of the motor.

## Revendications

1. Unité moteur, présentant :
- un stator (1),
- un rotor doté d'un arbre rotor (2),
- des moyens (12a, 14) destinés à la mise en contact électrique du stator,
- un récepteur de signaux rotor (18) coopérant avec un générateur de signaux rotor (17) de l'arbre rotor (2),
- des moyens (12b, 21) destinés à la mise en contact électrique du générateur de signaux rotor et
- une unité de commande du moteur (3),
**caractérisée par le fait que** les moyens (12a, 14) destinés à la mise en contact électrique du stator (1) et les moyens (12b, 21) destinés à la mise en contact électrique du récepteur de signaux rotor (18) qui coopère avec le générateur de signaux rotor (17) de l'arbre rotor (2), font partie intégrante de l'unité de commande du moteur (3).

2. Unité moteur selon la revendication 1, **caractérisée par le fait que** les moyens destinés à la mise en contact électrique comprennent des grillages estampés (12a, 12b).

3. Unité moteur selon la revendication 2, **caractérisée par le fait que** les grillages estampés sont fixés sur une plaque de base (11) de l'unité de commande du moteur (3).

4. Unité moteur selon la revendication 3, **caractérisée par le fait que** la plaque de base (11) est réalisée en matière plastique.

5. Unité moteur selon l'une des revendications 2 à 4, **caractérisée par le fait que** les moyens destinés à la mise en contact électrique comprennent au moins une plaque de contact (14).

6. Unité moteur selon la revendication 5, **caractérisée par le fait que** la plaque de contact (14) est conçue pour à la mise en contact d' un fil de bobinage (16) de l' enroulement de stator (15) avec un grillage estampé (12a).

7. Unité moteur selon l'une des revendications précédentes, **caractérisée par le fait que** le récepteur de signaux rotor (18) est un résolveur ou un capteur anisotrope à effet magnétorésistif.

8. Unité moteur selon l'une des revendications précédentes, **caractérisée par le fait que** le récepteur de signaux rotor (18) est relié électriquement avec un grillage estampé (12b) fixé sur la plaque de base (11) de l'unité de commande du moteur (3).

9. Unité moteur selon l'une des revendications précédentes, **caractérisée par le fait que** le récepteur de signaux rotor (18) est fixé à la plaque de base (11) de l'unité de commande du moteur (3).

10. Unité moteur selon l'une des revendications précédentes, **caractérisée par le fait que** l'unité de commande du moteur (3) présente un couvercle de fermeture (20) qui est relié à un boîtier (19) entourant le moteur destiné à garantir l'étanchéité de l'unité moteur.

11. Unité moteur selon l'une des revendications précédentes, **caractérisée par le fait que** la plaque de base (11) de l'unité de commande du moteur (3) est disposée dans la direction axiale du moteur à côté des éléments du moteur.
